# DEMANDE DE BREVET EUROPEEN

(11) **EP 3 223 219 A1**
(43) Date de publication de la demande: **27.09.2017**
(21) Numéro de dépôt: 17162482.8
(22) Date de dépôt: 23.03.2017
(51) Int. Cl.: G06Q 20/32, G06Q 20/42

(54) **PROCÉDÉ DE TRANSFERT DE TRANSACTION, PROCÉDÉ DE TRANSACTION ET TERMINAL METTANT EN OEUVRE AU MOINS L'UN D'EUX**

(30) Priorité: 24.03.2016 FR 1652568
(71) Demandeur: Orange, 75015 Paris (FR)
(72) Inventeur: BENDIABDALLAH, Halim, 92420 Vaucresson (FR); AGRO, Roberto, 92340 Bourg la Reine (FR)

(57) **Abrégé**

L'invention concerne un procédé de transfert de transaction, un procédé de transaction et un terminal mettant en oeuvre au moins l'un d'eux.

Un objet de l'invention est un procédé de transfert de transactions d'un premier terminal de communication sur un deuxième terminal de communication, le procédé de transfert de transactions comportant une mise à disposition par un premier terminal d'un élément relatif à une transaction débutée sur le premier terminal à destination d'un deuxième terminal, le deuxième terminal effectuant une transaction en fonction dudit élément.

Ainsi, une transaction peut être démarrée sur un premier terminal et terminée sur un deuxième terminal, notamment pour des raisons de sécurisation de la transaction.

## Description

L'invention concerne un procédé de transfert de transaction, un procédé de transaction et un terminal mettant en oeuvre au moins l'un d'eux.

Les transactions bancaires liées à des achats sur Internet sont largement répandues et représentent un volume de plus en plus important. Pour pallier à des transactions frauduleuses, les banques mettent en place des systèmes de plus en plus perfectionnées : AD Secure, génération de numéro de carte bleue virtuelle...

Dans le cas du système 3D Secure, un achat sur Internet depuis un terminal connecté sur un réseau de télécommunication quelconque est sécurisé grâce à une validation depuis son mobile. La transaction est envoyé du terminal à partir duquel l'utilisateur procède à l'achat vers un serveur de transaction qui envoie un SMS contenant un code vers un téléphone mobile associé à la carte bancaire dont le numéro a été saisi pour la transaction. Ce code devra être saisi par l'utilisateur sur le terminal pour finaliser la transaction.

Cette méthode permet d'authentifier l'utilisateur de la carte bancaire via son téléphone mobile mais n'élimine pas les risques de transactions via de faux sites (« fakes » en anglais) qui se font passer pour des sites marchands classiques, par exemple un site « amazone.fr » qui se fait passer pour « amazon.fr ». Le système de Secure 3D ne protège par l'usager d'un logiciel malveillant (« malware » en anglais) présent dans le terminal. En effet, le numéro de carte est saisi sur la machine et peut être subtilisé. De plus, la transaction traverse le réseau Internet et peut être détourné.

Certaines organismes (banques, opérateurs de télécommunications...) proposent aussi la génération d'une carte virtuelle pour un montant donné. Toutefois, ce mécanisme suscite plusieurs manipulations de la part de l'utilisateur (se connecter sur son espace client de l'organisme de carte virtuel, de saisir le montant d'achat, de générer le numéro virtuel et de le copier sur le site de transaction...) et n'évite pas non plus le risque de faux sites marchand. Cette méthode permet essentiellement d'interdire les débits au-delà du montant autorisé ou qu'un tiers (par exemple, au moyen d'un logiciel malveillant ou d'un système d'écoute sur le réseau) capturant le numéro de carte lors d'une transaction voulue ne puisse l'utiliser.

Un autre tendance pour la sécurisation des transaction est de s'appuyer sur des mécanismes de sécurité apportés par des opérateur de télécommunications afin de rendre la subtilisation de la transaction des trames IP de la transaction improbable voire impossible. Néanmoins, les terminaux servant généralement aux achats sur Internet ne permettent pas toujours un accès aux réseaux les plus sécurisés, notamment au réseau mobile. En effet, l'acheteur préfère généralement consulter ses catalogues et sélectionner ses produits sur un écran plus important que ceux des smartphones et effectuent donc leur transaction à partir d'ordinateur, de tablettes connectés au réseau Internet qui posent les problèmes de sécurité précédemment mentionnés.

Un des buts de la présente invention est de remédier à des inconvénients de l'état de la technique.

Un objet de l'invention est un procédé de transfert de transactions d'un premier terminal de communication sur un deuxième terminal de communication, le procédé de transfert de transactions comportant une mise à disposition par un premier terminal d'un élément relatif à une transaction débutée sur le premier terminal à destination d'un deuxième terminal, le deuxième terminal effectuant une transaction en fonction dudit élément.

Ainsi, une transaction peut être démarrée sur un premier terminal et terminée sur un deuxième terminal, notamment pour des raisons de sécurisation de la transaction.

Avantageusement, le premier terminal et le deuxième terminal sont connectés à des réseaux de télécommunications distincts.

Ainsi, la transaction bénéficie de la sécurité supplémentaire apportée par le réseau de communication auquel est connecté le deuxième terminal.

Avantageusement, le premier terminal est connecté à un réseau Internet.

Ainsi, la transaction est démarrée sur un terminal offrant un meilleure confort dans la phase de sélection de la transaction : le réseau Internet offrant une rapidité de chargement du catalogue et de sélection, et les terminaux connectés à ce réseau Internet offrant généralement un meilleur confort de reproduction : écran plus grand, meilleur précision d'affichage, meilleur son (volume plus important, carte sonore plus complexe...)

Avantageusement, la mise à disposition est une mise à disposition à un deuxième terminal situé à une très courte distance du premier terminal.

Ainsi, le risque de détournement du transfert entre les deux terminaux est limité.

Avantageusement, la mise à disposition comporte une émission de l'élément par le premier terminal via un réseau personnel.

Ainsi, non seulement le transfert est facilité puisque les terminaux n'ont pas besoin d'être connecté physiquement mais aussi le risque de détournement du transfert entre les deux terminaux est limité puisque les deux terminaux doivent être très proches l'un de l'autre.

Avantageusement, la mise à disposition comporte une reproduction de l'élément par le premier terminal sous forme d'un affichage d'un code QR constituant l'élément.

Ainsi, non seulement le transfert est facilité puisque les terminaux n'ont pas besoin d'être connecté physiquement mais aussi le risque de détournement du transfert entre les deux terminaux est nul puisque l'utilisateur du premier terminal choisit à quel deuxième terminal il permet la capture du code QR affiché par le premier terminal.

Avantageusement, l'élément comporte une ou plusieurs données parmi les suivantes :
- des données de transactions dont au moins une des données transactions suivantes :
   ▪ Une adresse du serveur de transactions;
   ▪ Un montant de transaction;
   ▪ Un objet de transaction;
   ▪ Un identifiant de transaction;
   ▪ Un identifiant d'un destinataire de transaction;
   ▪ Un identifiant d'un émetteur de transaction;
- Un lien vers un ou plusieurs des données de transactions.

Ainsi, la transaction se terminera sur le deuxième terminal sans que l'utilisateur n'ait besoin de ressaisir des informations déjà saisies sur le premier terminal.

Un objet de l'invention est également un procédé de transaction sur un deuxième terminal de communication, le procédé de transaction comportant une lecture d'un élément relatif à une transaction débutée sur un premier terminal de communication, la lecture déclenchant une connexion du deuxième terminal à un serveur de transactions via un réseau de communication en fonction de l'élément lu, l'élément ayant été fourni par le premier terminal au deuxième terminal.

Ainsi, une transaction peut être démarrée sur un premier terminal et terminée sur un deuxième terminal, notamment pour des raisons de sécurisation de la transaction.

Avantageusement, le deuxième terminal est connecté à un réseau de télécommunication cellulaire.

Ainsi, la transaction bénéficie de la sécurité supplémentaire apportée par le réseau de communication cellulaire auquel est connecté le deuxième terminal.

Avantageusement, la lecture comporte une réception de l'élément transmis par le premier terminal sur un réseau personnel.

Ainsi, non seulement le transfert est facilité puisque les terminaux n'ont pas besoin d'être connecté physiquement mais aussi le risque de détournement du transfert entre les deux terminaux est limité puisque les deux terminaux doivent être très proches l'un de l'autre.

Avantageusement, la lecture comporte une capture de l'élément reproduit par le premier terminal.

Ainsi, non seulement le transfert est facilité puisque les terminaux n'ont pas besoin d'être connecté physiquement mais aussi le risque de détournement du transfert entre les deux terminaux est nul puisque l'utilisateur du premier terminal choisit à quel deuxième terminal il permet la capture du code QR affiché par le premier terminal.

Avantageusement, le procédé de transaction comporte une connexion du deuxième terminal au serveur de transactions via un réseau de télécommunication en fonction de l'élément lu.

Ainsi, la transaction se termine sur le deuxième terminal sans que l'utilisateur n'ait besoin de se reconnecter au dispositif gérant la transaction auquel il s'est connecté au moyen du premier terminal.

Avantageusement, le procédé de transaction comporte un échange de données entre le deuxième terminal et le serveur de transaction autorisant une transaction fonction de l'élément lu.

Ainsi, l'auteur de la transaction est authentifié.

Avantageusement, selon une implémentation de l'invention, les différentes étapes du procédé selon l'invention sont mises en oeuvre par un logiciel ou programme d'ordinateur, ce logiciel comprenant des instructions logicielles destinées à être exécutées par un processeur de données d'un dispositif faisant partie d'un terminal de communication et étant conçus pour commander l'exécution des différentes étapes de ce procédé.

L'invention vise donc aussi un programme comprenant des instructions de code de programme pour l'exécution des étapes du procédé de transfert de transactions selon l'invention et/ou des étapes du procédé de transaction selon l'invention lorsque le programme est exécuté par un processeur.

Ce programme peut utiliser n'importe quel langage de programmation et être sous la forme de code source, code objet ou code intermédiaire entre code source et code objet tel que dans une forme partiellement compilée ou dans n'importe quelle autre forme souhaitable.

Un objet de l'invention est aussi un terminal de communication comportant au moins un des dispositifs suivants :
- Un module de transfert de transaction mettant à disposition un élément relatif à une transaction débutée sur le terminal à destination d'un autre terminal, l'autre terminal effectuant une transaction en fonction dudit élément.
- Un lecteur d'élément relatif à une transaction débutée sur un autre terminal de communication, le lecteur commandant une connexion du terminal à un serveur de transactions via un réseau de communication en fonction de l'élément lu, l'élément ayant été fourni par l'autre terminal au terminal de communication.

Les caractéristiques et avantages de l'invention apparaîtront plus clairement à la lecture de la description, faite à titre d'exemple, et des figures s'y rapportant qui représentent :
- Figure 1, un schéma simplifié d'un procédé de transfert de transaction selon l'invention,
- Figure 2, un schéma simplifié d'un procédé de transaction selon l'invention,
- Figure 3, un diagramme simplifié d'échanges entre un premier terminal de communication, un deuxième terminal de communication selon l'invention, un dispositif de fourniture de service, et un serveur de transaction ;
- Figure 4, un système de transaction comportant un premier terminal de communication et un deuxième terminal de communication selon l'invention.

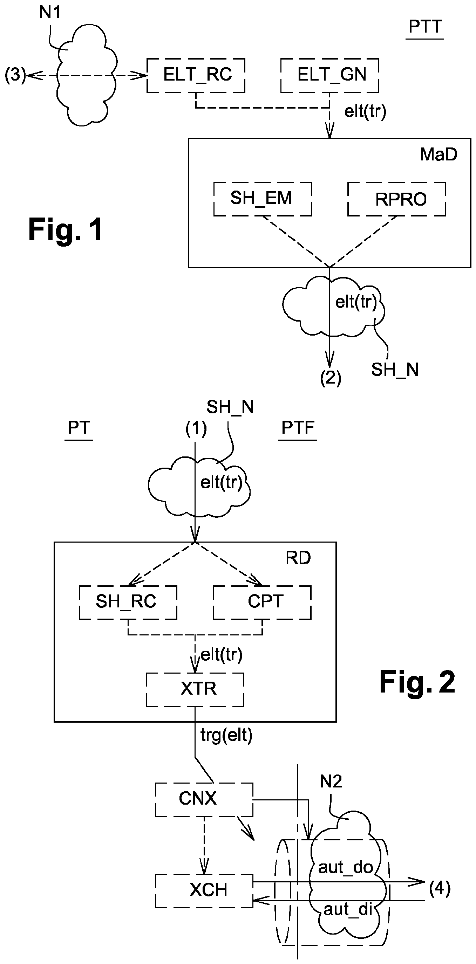

La figure 1 illustre un schéma simplifié d'un procédé de transfert de transaction selon l'invention.

Le procédé de transfert de transactions PTT permet le transfert des transactions d'un premier terminal de communication 1 sur un deuxième terminal de communication 2. Le procédé de transfert de transactions PTT comporte une mise à disposition MaD par un premier terminal 1 d'un élément elt relatif à une transaction tr débutée sur le premier terminal 1 à destination d'un deuxième terminal2, le deuxième terminal 2 effectuant une transaction tr en fonction dudit élément elt.

En particulier, le premier terminal 1 et le deuxième terminal 2 sont connectés à des réseaux de télécommunications distincts N1 et N2.

En particulier, le premier terminal 1 est connecté à un réseau Internet N1.

En particulier, la mise à disposition MaD est une mise à disposition à un deuxième terminal 2 situé à une très courte distance du premier terminal 1.

En particulier, la mise à disposition MaD comporte une émission SH-EM de l'élément elt(tr) par le premier terminal 1 via un réseau personnel SH_N. Le réseau personnel est un réseau sans fil individuel noté WPAN pour Wireless Personnal Aerea Network en anglais. Le réseau personnel est un réseau de faible portée de l'ordre de quelques dizaines de mètres maximum. Il permet une liaison sans fil entre deux terminaux (ordinateur, tablettes, smartphones, imprimantes, télévision, appareils domestiques...) très peu distantes. Le réseau personnel utilise, notamment, l'une des nombreuses technologies actuellement disponibles tel que le Bluetooth, la technologie dite « HomeRF » pour Home Radio Frequency en anglais (soit une technologie de fréquence radio très courte distance), ZigBee, Infrarouges...

En particulier, la mise à disposition MaD comporte une reproduction RPRO de l'élément elt(tr) par le premier terminal 1 sous forme d'un affichage d'un code QR constituant l'élément elt.

En particulier, l'élément elt comporte une ou plusieurs données parmi les suivantes :
- des données de transactions dont au moins une des données transactions suivantes :
   - Une adresse du serveur de transactions;
   - Un montant de transaction;
   - Un objet de transaction;
   - Un identifiant de transaction;
   - Un identifiant d'un destinataire de transaction;
   - Un identifiant d'un émetteur de transaction;
   - Un lien vers un ou plusieurs des données de transactions.

Par données de transaction est entendu tout type de données relatives à la transaction dont notamment celles citées ci-dessus. Par objet de transaction est notamment entendu une description ou un libellé de la transaction. Par destinataire de transaction est notamment entendu le site marchand recevant le montant de la transaction. Par émetteur de transaction est notamment entendu le client du site marchand achetant un produit ou service au site marchand et versant en échange le montant de la transaction.

En particulier, le procédé de transfert de transactions PTT comporte une génération d'un élément ELT_GN en fonction de données relatives à une transaction en cours sur le premier terminal 1, notamment en fonction de l'une ou plusieurs des données énumérées ci-dessus.

En particulier, la génération de l'élément ELT-GN est effectuée par un dispositif de fourniture de service 3 avec lequel le premier terminal a débuté la transaction. La réception de l'élément ELT_RC est alors notamment réalisée par le procédé de transfert de transactions PTT à travers le réseau N1 auquel est connecté le premier terminal de communication 1 en provenance du dispositif de fourniture de service 3.

L'élément généré elt(tr) est alors mis à disposition MaD par le procédé de transfert de transaction PTT au deuxième terminal de communication 2.

Dans un mode de réalisation particulier, le procédé de transfert de transactions PTT est mis en oeuvre sous la forme d'un programme comprenant des instructions de code de programme pour l'exécution des étapes du procédé de transfert de transactions selon l'invention lorsque le programme est exécuté par un processeur.

La figure 2 illustre un schéma simplifié d'un procédé de transaction selon l'invention.

Le procédé de transaction PTF sur un deuxième terminal de communication comporte une lecture RD d'un élément elt relatif à une transaction tr débutée sur un premier terminal de communication1. La lecture RD déclenche une connexion CNX du deuxième terminal 2 à un serveur de transactions 4 via un réseau de communication N2 en fonction de l'élément lu elt. L'élément elt a été fourni par le premier terminal 1 au deuxième terminal 2.

En particulier, le deuxième terminal 2 est connecté à un réseau de télécommunication cellulaire N2.

En particulier, la lecture RD comporte une réception SH_RC de l'élément transmis elt(tr) par le premier terminal 1 sur un réseau personnel SH_N.

En particulier, la lecture RD comporte une capture CPT de l'élément reproduit elt(tr) par le premier terminal 1.

En particulier, la lecture comporte un extracteur de données XTR de l'élément lu elt(tr) soit par réception SH-RC sur le réseau personnel SH_N, soit par capture CPT. L'extracteur XTR récupère soit directement dans l'élément lu elt(tr), soit indirectement : notamment par requête à un dispositif distant via le réseau de communication N2, des données concernant la transaction permettant au moins dans un premier temps de commander trg(elt) l'établissement de la connexion avec le serveur de transaction 4, telles que notamment une adresse du serveur de transactions 4 et/ou un lien vers une adresse du serveur de transactions 4. L'extraction permet aussi de récupérer d'autres données concernant la transaction, tel que notamment :
- des données de transactions dont au moins une des données transactions suivantes :
   - Un montant de transaction;
   - Un objet de transaction;
   - Un identifiant de transaction;
   - Un identifiant d'un destinataire de transaction;
   - Un identifiant d'un émetteur de transaction;
- Un lien vers un ou plusieurs des données de transactions.

En particulier, le procédé de transaction PTF comporte une connexion CNX du deuxième terminal 2 au serveur de transactions 4 via un réseau de télécommunication N2 en fonction de l'élément lu elt(tr).

En particulier, le procédé de transaction PTF comporte un échange de données XCH entre le deuxième terminal 2 et le serveur de transaction 4 autorisant une transaction fonction de l'élément lu elt(tr), notamment de données d'autorisation aut_do de transaction du deuxième terminal 2 vers le serveur de transaction 4 et/ou de données d'autorisation aut_di de transaction du serveur de transaction 4 vers le deuxième terminal 2.

Dans un mode de réalisation particulier, le procédé de transaction PTF est mis en oeuvre sous la forme d'un programme comprenant des instructions de code de programme pour l'exécution des étapes du procédé de transaction selon l'invention lorsque le programme est exécuté par un processeur.

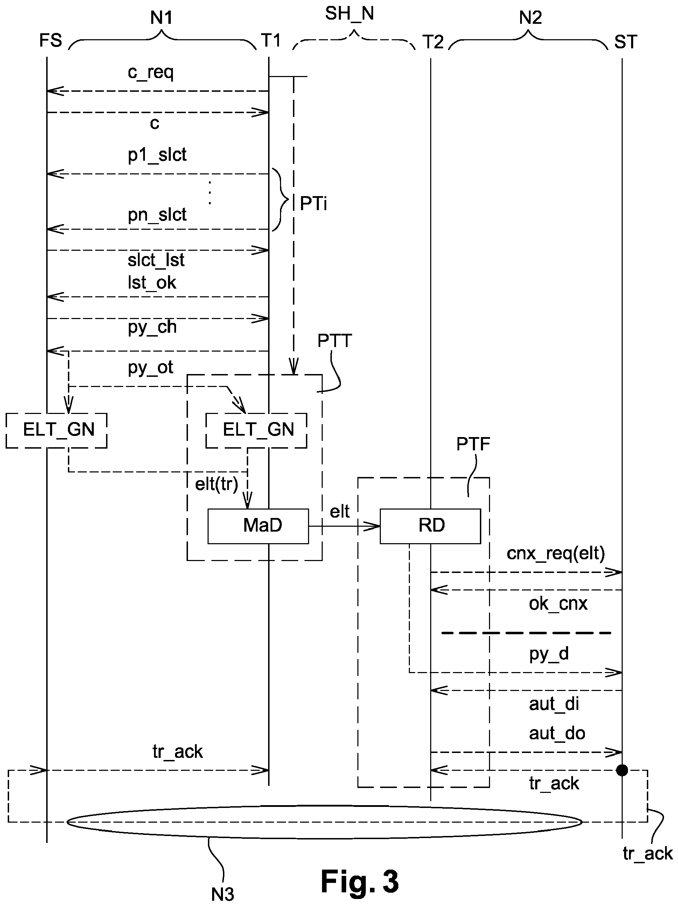

La figure 3 illustre un diagramme simplifié d'échanges entre un premier terminal de communication 1, un deuxième terminal de communication 2 selon l'invention, un dispositif de fourniture de service 3, et un serveur de transaction 4.

Le premier terminal de communication T1, par exemple un ordinateur au moyen d'un navigateur Internet, se connecte à un dispositif de fourniture de service FS, tel qu'un site marchand, via un premier réseau de communication N1, notamment un réseau Internet. Le premier terminal de communication T1 met alors en oeuvre un procédé d'initialisation d'une transaction PTI. Ce procédé d'initialisation de transaction PTI comporte notamment au moins certaines des étapes suivantes jusqu'à la transmission d'un choix de mode de paiement.

La connexion du premier terminal de communication T1 au dispositif de fourniture de service FS permet au premier terminal T1 de requérir l'accès au catalogue du site marchand c_req. Requête à laquelle, le dispositif de fourniture de service FS répond en envoyant au premier terminal de communication son catalogue c. Ainsi, l'utilisateur du premier terminal de communication T1 au moyen d'une interface homme machine (non illustrée) procède à une sélection de produits dans le catalogue. Le premier terminal transmet au dispositif de fourniture de service chaque sélection de produit dans le catalogue : p1_slct...pn_slct. Le dispositif de fourniture de service FS met ainsi à jour la liste de produits sélectionnés slct_Ist et la renvoie au premier terminal soit dès que celle-ci a été mise à jour, soit uniquement avant de finaliser la transaction. Le premier terminal de communication T1 renvoie alors un accord sur la liste Ist_ok avant de procéder à la finalisation de la transaction. La réception de l'accord sur la liste de produits sélectionnés Ist_ok par le dispositif de fourniture de service FS déclenche une proposition de choix de mode de paiement py_md transmise au premier terminal de communication. Le premier terminal de communication transmet alors un mode de paiement choisit au dispositif de fourniture de service FS.

Si le mode de paiement choisit peut être mis en oeuvre à partir du premier terminal (non illustré), le dispositif de fourniture de service FS connectera le premier terminal de communication à un serveur de transaction ST et la transaction sera finalisée par le premier terminal de communication T1.

Notre invention permet de proposer au premier terminal de communication un mode de paiement à partir d'un deuxième terminal de communication T2, notamment pour des raisons de sécurisation de la transaction. Lorsque le premier terminal de communication indique un tel choix de mode de paiement m : py_ot, le premier terminal de communication met en oeuvre un procédé de transfert de transaction PTT. Un élément est généré ELT_GN soit par le dispositif de fourniture de service FS, soit par le premier terminal de communication, puis mis à disposition MaD par le premier terminal de communication T1 à destination d'un deuxième terminal de communication proche de celui-ci notamment via un réseau de communication personnel SH_N ou par reproduction par exemple d'un code QR.

Le deuxième terminal de communication T2 met alors en oeuvre le procédé de transaction PTF permettant de finaliser la transaction débutée sur le premier terminal de communication T1. Pour cela, le deuxième terminal de communication lit RD l'élément mis à disposition par le premier terminal de communication T1. Puis, en fonction de cet élément elt, requiert la connexion cn_req avec le serveur de transaction ST via le réseau de communication N2 auquel est connecté le deuxième terminal de communication T2. Une fois la connexion établie, notamment après acception de la connexion ok_cnx par le serveur de transaction ST au deuxième terminal de communication T2, les données de transaction py_dt dont reçues par le serveur de transaction ST soit directement du deuxième terminal T2 qui les a, par exemple, extraites de l'élément lu elt, soit indirectement : le serveur de transaction ST ayant récupérées du deuxième terminal de communication l'élément lu et transmis au dispositif de fourniture de service FS pour récupérées les données de transaction py_dt. Le serveur de transaction ST disposant de l'ensemble des données relatives à la transaction, il échange avec le deuxième terminal de communication des données relatives à l'authentification de la transaction :aut-di et aut_do permettant au serveur de transaction ST d'autoriser la transaction. Lorsque la transaction est terminée, le serveur de transaction ST envoie un accusé de transaction tr_ack au moins au deuxième terminal de communication, voire via un réseau de communication N3 au dispositif de fourniture de service FS qui le transmettra éventuellement au premier terminal de communication T1. Ainsi, les deux terminaux de communication concernés par la transaction disposeront de l'information que la transaction a aboutie.

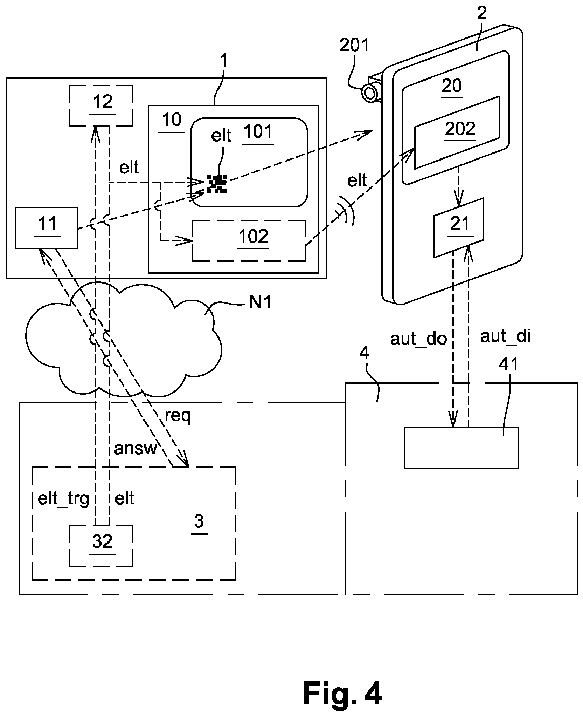

La figure 4 illustre un système de transaction comportant un premier terminal de communication et un deuxième terminal de communication selon l'invention.

Le premier et/ou deuxième terminal de communication 1, 2 comporte au moins un des dispositifs suivants :
- Un module de transfert de transaction 10 mettant à disposition un élément elt relatif à une transaction tr débutée sur le terminal 1,2 à destination d'un autre terminal 2,1, l'autre terminal 2, 1 effectuant une transaction en fonction dudit élément elt.
- Un lecteur 20 d'élément elt relatif à une transaction tr débutée sur un autre terminal de communication 2,1, le lecteur 20 commandant une connexion du terminal 1,2 à un serveur de transactions 4 via un réseau de communication N1, N2 en fonction de l'élément lu elt, l'élément elt ayant été fourni par l'autre terminal 2,1 au terminal de communication.

Dans l'exemple de notre figure 4, un terminal de communication 1, dit aussi premier terminal 1, comporte le module de transfert de transaction 10 mettant à disposition un élément elt relatif à une transaction tr débutée sur le terminal 1 à destination d'un autre terminal 2, l'autre terminal 2 effectuant une transaction en fonction dudit élément elt.

En particulier, le premier terminal 1 comporte un dispositif d'accès 11, tel qu'un navigateur Internet, à un dispositif de fourniture de service 3 via un réseau de communication N1 auquel est connecté le premier terminal 1. Ainsi, le dispositif d'accès 11 et le dispositif de fourniture de service 3 échange req, ans pour établir une transaction.

En particulier, le dispositif de fourniture de service 3 ou le premier terminal 1 comporte un générateur d'élément relatif à une transaction, respectivement 32, 12. Ainsi, lorsque le premier terminal 1 indique req qu'il souhaite transférer la transaction au dispositif de fourniture de service 3, le dispositif de fourniture de service commande le générateur d'élément 12 ou 32 qui fournit au module de transfert de transaction 10 l'élément généré elt.

En particulier, le module de transfert de transaction comporte le générateur d'élément 12 du premier terminal de communication 1.

En particulier, le module de transfert 10 de transaction commande la reproduction par un écran 101 du premier terminal de communication de l'élément généré pour le mettre à disposition d'un deuxième terminal de communication, notamment sous la forme d'un code QR comme illustré par la figure 4.

Dans un mode de réalisation alternatif ou complémentaire, le module de transfert 10 de transaction commande l'émission, par un transmetteur sur réseau personnel 102 du premier terminal de communication, de l'élément généré pour le mettre à disposition d'un deuxième terminal de communication.

Par exemple, sur validation d'un panier de produits sélectionnés au moyen du premier terminal 1 sur le site marchand d'un dispositif de fourniture de service 3, le dispositif de fourniture de service 3 commande le générateur d'élément 12, 22, notamment de QRCode, en lui fournissant des données de la transaction. Soit le premier terminal de communication 1, soit le dispositif de fourniture de service 3, soit un dispositif tiers (non illustré) comporte ce générateur de QRCode. Le générateur d'élément 12, 22 génère notamment un identifiant unique de la transaction et, le cas échéant, encapsule les données dans un QRCode reproduit par le premier terminal de communication 1 lors de la mise à disposition de l'élément elt. Notamment, le générateur d'élément 22 fournit l'élément au dispositif de fourniture de service FS qui en commande la mise à disposition par le premier terminal T1.

Dans l'exemple de notre figure 4, un autre terminal de communication 2, dit aussi deuxième terminal 2, comporte le lecteur 20 d'élément elt relatif à une transaction tr débutée sur le premier terminal de communication 1, le lecteur 20 commandant une connexion du deuxième terminal 2 à un serveur de transactions 4 via un réseau de communication N2 en fonction de l'élément lu elt, l'élément elt ayant été fourni par le premier terminal 1 au deuxième terminal de communication 2.

En particulier, le lecteur 20 commande la capture par une caméra 201 du deuxième terminal de communication 2 de l'élément reproduit par un premier terminal de communication 1, notamment sous la forme d'un code QR comme illustré par la figure 4.

Notamment, le lecteur d'élément du deuxième terminal T2 comporte un décodeur de QRCode pour extraire, dans le cas de l'exemple susmentionné, l'identifiant unique de transaction. En outre, le deuxième terminal de communication peut comporter un dispositif de transaction incluant le lecteur 20 (par exemple sous la forme d'un processeur mettant en oeuvre une application de transaction). Soit le dispositif de transaction connait l'adresse du serveur de transaction et déclenche le dispositif de connexion 21, notamment dans le cas où le dispositif de transaction est spécifique à un opérateur de télécommunication, soit le dispositif de transaction interroge un annuaire de serveur de transaction qui fournit l'adresse d'un serveur de transaction en fonction du numéro du deuxième terminal de communication.

Le serveur de transaction 4 requiert notamment une authentification au deuxième terminal de communication 2: par exemple la saisie d'un PIN Code par l'utilisateur du deuxième terminal de communication 2. Les données d'authentification sont envoyées par le deuxième terminal de communication 2, en particulier par son dispositif de transaction, au serveur de transaction 4, en particulier à un dispositif d'authentification du serveur de transaction 4.

Dans le cas d'une correspondance entre un identifiant de l'auteur de la transaction (identifiant utilisateur, identifiant du deuxième terminal de de communication) et les données d'authentification reçues (PIN Code, données biométriques...), le dispositif de transaction continue le procédé de transaction, sinon il commande la reproduction par au moins le deuxième terminal 2 d'un message d'erreur lui indiquant que l'authentification a échouée.

Si la transaction se poursuit, le dispositif de transaction du deuxième terminal 2 envoie une requête vers le serveur de transaction 4 fournissant au moins une donnée relative à la transaction telle qu'un identifiant de transaction. Le serveur de transaction 4 comporte notamment un gestionnaire de transaction (non illustré) apte à retrouver les détails de la transaction soit dans une base de données du gestionnaire de transaction alimenté notamment par le dispositif de fourniture de service 3 lors de la génération de l'identifiant unique de transaction, soit directement auprès du dispositif de fourniture de service 3. Le serveur de transaction 4, notamment le gestionnaire de transaction, contacte, par exemple, un dispositif de paiement en fournissant les données relatives au compte payeur (carte bancaire, virement SEPA... par exemple) ainsi que le montant de la transaction qui acquitte la transaction. Le serveur de transaction 4, notamment le gestionnaire de transaction, envoie une notification au dispositif de transaction du deuxième terminal 2, voire à la fois au dispositif de fourniture de service 3 sur le succès ou l'échec de la transaction.

Dans un autre mode de réalisation, les détails des transactions sont encodées dans l'élément au lieu de ne fournir qu'un identifiant de transaction. Ainsi, le serveur de transaction 4 a besoin de moins d'échanges notamment avec le gestionnaire de transaction pour retrouver les détails de la transaction puisque le lecteur 20 les lui fournit.

L'utilisation d'un identifiant unique de transaction permet de limiter les données inscrites dans l'élément permet ainsi l'utilisation d'élément plus simple tel qu'un QRCode de taille restreinte.

En particulier, le deuxième terminal 2 comporte un dispositif de connexion 21 au serveur de transaction 4 via un réseau de communication N2 auquel est connecté le deuxième terminal 2. Ainsi, le dispositif de connexion 21 et le serveur de transaction 4 échange aut_di, aut_do pour autoriser la transaction en fonction de l'élément lu. La transaction est notamment un paiement par carte bancaire, un paiement sur facture de l'opérateur du terminal de communication...

Pour sécuriser la transaction, le deuxième terminal de communication 2 est connecté à un réseau cellulaire N2, tel qu'un réseau de communication mobile notamment utilisant l'une des technologies 2G, 3G, 4G, 5G, H+, Edge... La transaction empruntant le réseau cellulaire, le serveur de transaction 4 peut comporter des mécanismes de sécurité supplémentaires comme un vérificateur de pays du dispositif de fourniture de service 3. En effet, une banque ou un site marchant pourrait interdire les paiements provenant de pays particulier. En outre, la vérification de pays pourrait aussi utiliser la géolocalisation du deuxième terminal de communication.

Ainsi à aucun moment le numéro de carte bancaire n'est saisi sur un terminal sensible tel qu'un terminal de communication connecté à un réseau Internet sur lequel le détournement de transaction est plus facile. La transaction traverse un canal sécurisé et évite le « fishing » en anglais ou toute technique de transaction frauduleuse. L'opérateur de réseau cellulaire joue le rôle de tiers de confiance auprès de l'utilisateur. En effet, l'opérateur garantie ainsi l'authentification du site marchand.

L'invention vise aussi un support. Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique ou encore un moyen d'enregistrement magnétique, par exemple une disquette ou un disque dur.

D'autre part, le support d'informations peut être un support transmissible tel qu'un signal électrique ou optique qui peut être acheminé via un câble électrique ou optique, par radio ou par d'autres moyens. Le programme selon l'invention peut être en particulier téléchargé sur un réseau notamment de type Internet.

Alternativement, le support d'informations peut être un circuit intégré dans lequel le programme est incorporé, le circuit étant adapté pour exécuter ou pour être utilisé dans l'exécution du procédé en question.

Dans une autre implémentation, l'invention est mise en oeuvre au moyen de composants logiciels et/ou matériels. Dans cette optique le terme module peut correspondre aussi bien à un composant logiciel ou à un composant matériel. Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonction selon la description ci-dessous. Un composant matériel correspond à tout élément d'un ensemble matériel (ou hardware) apte à mettre en oeuvre une fonction ou un ensemble de fonctions.

## Revendications

1. Procédé de transfert de transactions d'un premier terminal de communication sur un deuxième terminal de communication, le procédé de transfert de transactions comportant une mise à disposition par un premier terminal d'un élément relatif à une transaction débutée sur le premier terminal à destination d'un deuxième terminal, le deuxième terminal effectuant une transaction en fonction dudit élément.

2. Procédé de transfert de transactions selon la revendication précédente **caractérisé en ce que** le premier terminal et le deuxième terminal sont connectés à des réseaux de télécommunications distincts.

3. Procédé de transfert de transactions selon l'une quelconque des revendications précédentes, **caractérisé en ce que** le premier terminal est connecté à un réseau Internet.

4. Procédé de transfert de transactions selon l'une quelconque des revendications précédentes, **caractérisé en ce que** la mise à disposition est une mise à disposition à un deuxième terminal situé à une très courte distance du premier terminal.

5. Procédé de transfert de transactions selon l'une quelconque des revendications précédentes, **caractérisé en ce que** la mise à disposition comporte une émission de l'élément par le premier terminal via un réseau personnel.

6. Procédé de transfert de transaction selon l'une quelconque des revendications précédentes, **caractérisé en ce que** la mise à disposition comporte une reproduction de l'élément par le premier terminal sous forme d'un affichage d'un code QR constituant l'élément.

7. Procédé de transfert de transactions selon l'une quelconque des revendications précédentes, **caractérisé en ce que** l'élément comporte une ou plusieurs données parmi les suivantes :
• des données de transactions dont au moins une des données transactions suivantes :
- Une adresse du serveur de transactions;
- Un montant de transaction;
- Un objet de transaction;
- Un identifiant de transaction;
- Un identifiant d'un destinataire de transaction;
- Un identifiant d'un émetteur de transaction;
• Un lien vers un ou plusieurs des données de transactions.

8. Procédé de transaction sur un deuxième terminal de communication, le procédé de transaction comportant une lecture d'un élément relatif à une transaction débutée sur un premier terminal de communication, la lecture déclenchant une connexion du deuxième terminal à un serveur de transactions via un réseau de communication en fonction de l'élément lu, l'élément ayant été fourni par le premier terminal au deuxième terminal.

9. Procédé de transaction selon la revendication précédente, **caractérisé en ce que** le deuxième terminal est connecté à un réseau de télécommunication cellulaire.

10. Procédé de transaction selon l'une quelconque des revendications 8 ou 9, **caractérisé en ce que** la lecture comporte une réception de l'élément transmis par le premier terminal sur un réseau personnel.

11. Procédé de transaction selon l'une quelconque des revendications 8 à 10, **caractérisé en ce que** la lecture comporte une capture de l'élément reproduit par le premier terminal.

12. Procédé de transaction selon l'une quelconque des revendications 8 à 11 **caractérisé en ce que** le procédé de transaction comporte une connexion du deuxième terminal au serveur de transactions via un réseau de télécommunication en fonction de l'élément lu.

13. Procédé de transaction selon l'une quelconque des revendications 8 à 12 **caractérisé en ce que** le procédé de transaction comporte un échange de données entre le deuxième terminal et le serveur de transaction autorisant une transaction fonction de l'élément lu.

14. Programme comprenant des instructions de code de programme pour l'exécution des étapes du procédé de transfert de transactions selon l'une quelconque des revendications 1 à 7 et/ou des étapes du procédé de transaction selon l'une quelconque des revendications 8 à 13 lorsque le programme est exécuté par un processeur.

15. Terminal de communication comportant au moins un des dispositifs suivants :
• Un module de transfert de transaction mettant à disposition un élément relatif à une transaction débutée sur le terminal à destination d'un autre terminal, l'autre terminal effectuant une transaction en fonction dudit élément.
• Un lecteur d'élément relatif à une transaction débutée sur un autre terminal de communication, le lecteur commandant une connexion du terminal à un serveur de transactions via un réseau de communication en fonction de l'élément lu, l'élément ayant été fourni par l'autre terminal au terminal de communication.
